# EUROPEAN PATENT APPLICATION

(11) **EP 0 884 622 A2**
(43) Date of publication of application: **16.12.1998**
(21) Application number: 98304571.7
(22) Date of filing: 09.06.1998
(51) Int. Cl.: G02F 1/1335, G02B 5/30, G04G 9/00

(54) **Display device and electronic timepiece**

(30) Priority: 09.06.1997 JP 150954/97; 09.07.1997 JP 184124/97
(71) Applicant: SEIKO EPSON CORPORATION, Tokyo 163 (JP)
(72) Inventor: Arikawa, Yasuo, Suwa-shi, Nagano-ken 392-8502 (JP); Miyazawa, Eiichi, Suwa-shi, Nagano-ken 392-8502 (JP)
(74) Representative: Sturt, Clifford Mark

(57) **Abstract**

To provide a display device and an electronic timepiece in which displayed information, such as numerical information, and the background have a glossy silver metallic tone, in order to give the display quality appearance.

The display device and the electronic timepiece includes a polariser 11, a liquid crystal panel 8, and a polarised light separating film 12. The polarised light separating film 12 transmits a linearly polarised light component oriented in a certain direction (indicated by arrow Q) and reflects all other linearly polarised light components (indicated by arrow P). The surface of the polarised light separating film 12 which opposes the liquid crystal panel 8 is formed into a smooth surface which specularly reflects light, and a light-scattering layer is not provided therebetween. Light, reflected from the polarised light separating film 12, is used to produce a glossy silver background colour or information display with a metallic tone in order to give the display quality appearance.

## Description

The present invention relates to a display device for displaying characters, numbers, patterns, or the like. The present invention also relates to an electronic timepiece, such as a wristwatch or a stopwatch, for giving or measuring time.

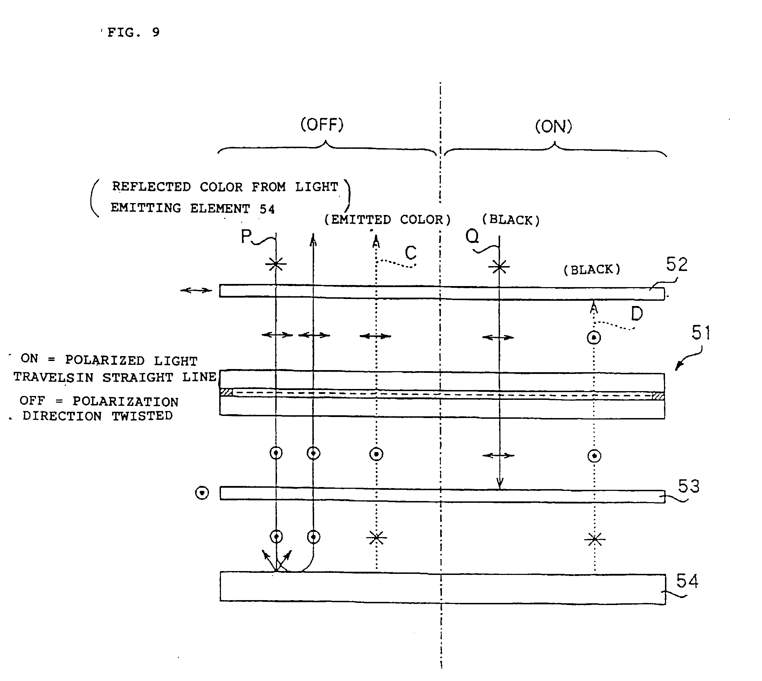

Conventionally, there are widely known display devices which utilise flat displays, such as liquid crystal displays, for displaying numbers, characters, or other information. For example, as shown in Fig. 9, in an electronic timepiece utilising a liquid crystal display, a pair of polarisers 52 and 53 are placed on both sides of a liquid crystal panel 51, and a light-emitting element 54 is disposed at the back side of the polariser 53. The pair of polarisers 52 and 53 are disposed such that, for example, their azimuthal angles are set to form a right angle.

During daytime, conventional electronic timepieces display numerical information or the like using external light, whereas during the night they display numerical information or the like using light emitted from the light-emitting element 54, when necessary. Numerical information or the like is displayed by applying a predetermined voltage between the electrodes of the liquid crystal panel 51, with the area to which voltage is not applied appearing as a white background or the like. In the figure, the area to which a voltage is applied to display information is represented as ON, whereas the background colour area to which a voltage is not applied is represented as OFF.

As indicated by arrow P, when external light is used to produce background colour of a display (liquid crystal panel is turned off), the linearly polarised light component of the external light or natural light, which is oriented parallel to the plane of the figure passes through the polariser 52. Then, the polarisation direction thereof is twisted 90 degrees by the liquid crystal panel 51 in an off state, causing the linearly polarised light component to be oriented perpendicular to the plane of the figure. The linearly polarised light component, which has passed through the polariser 53, is irregularly reflected by a surface of the light-emitting element 54, and part of the irregularly reflected light is transmitted successively back through the polariser 53, the liquid crystal panel 51, and the polariser 52. The part of the irregularly reflected light by the light-emitting element 54 ordinarily produces a white background which is perceived by any viewer.

As indicated by arrow Q, when numerical information or the like is to be displayed using external light (the liquid crystal panel 51 is turned on), the linearly polarised light component, which is oriented parallel to the plane of the figure, is separated from the external light by the polariser 52, and passes through the liquid crystal panel 51. Since the liquid crystal panel 51 is in an on state, the polarisation direction of the linearly polarised light component is maintained parallel to the plane of the figure, so that it is absorbed by the polariser 53. The portion that has absorbed the light appears black to any viewer.

As can be understood from the foregoing description, when external light is used, numbers or the like are displayed on a background having a colour corresponding to that reflected from the light-emitting element 54 in order to display the time or other information.

On the other hand, as indicated by arrow C, when a background colour is to be produced using light emitted from the light-emitting element 54 (the liquid crystal panel 51 is turned off), the linearly polarised light component which is oriented perpendicular to the plane of the figure is separated from the light or random polarised light emitted from the light-emitting element 54 by the polariser 53. Since the liquid crystal panel 51 is in an off state, the polarisation direction of the linearly polarised light component is twisted 90 degrees by the liquid crystal panel 51, causing the linearly polarised light component to be oriented parallel to the plane of the figure. Then, the polarised light component passes through the polariser 52 and is perceived by an outside viewer. The perceived colour is the colour emitted from the light emitting element 54, which is ordinarily white.

As indicated by arrow D, when numerical information or the like is to be displayed using light emitted from the light emitting element 54 (the liquid crystal panel 51 is turned on), the linearly polarised light component, which is oriented perpendicular to the plane of the figure is separated from the light emitted from the light emitting element 54 by the polariser 53, passes through the liquid crystal panel 51 in an on state, and reaches the polariser 52. Here, the polarisation direction of the linearly polarised light component does not match the polarisation direction of the polariser 52, so that the linearly polarised light component is absorbed by the polariser 52. The portion, which has absorbed the light, appears black to any viewer.

As can be understood from the foregoing description, when light from the light-emitting element 54 is used, numbers or the like are displayed in black or the like on a background having a colour corresponding to the colour emitted from the light emitting element 54.

In the above-described conventional electronic timepiece, two polarisers 52 and 53 are disposed on both sides of the liquid crystal panel 51. These polarisers are capable of absorbing linearly polarised light components other than that having a predetermined polarisation axis. Therefore, the intensity of the light, led to the outside for producing a background colour or displaying numerical information or the like, may be greatly reduced, causing numerical information or the like to appear dark, and thus difficult to read.

Theoretically speaking, various background colours can be produced, or numerical information or the like can be displayed in various colours by providing a colour filter, producing the right colour, at a surface of the light-emitting element 54. Actually, however, various display colours cannot be produced, since the light intensity is greatly reduced, so that either a bright, white colour or grey had to be used for the display.

In view of the above-described problems, it is an object of the present invention is to make it possible to cause displayed numerical information, or the like, and the background to have a glossy silver metallic tone in order to give quality appearance to the display.

Embodiments of the present invention will now be described by way of example only and with reference to the accompanying drawings, in which:-

Fig. 1 is a perspective view schematically showing the main portion of an embodiment of a display device in accordance with the present invention.

Fig. 2 is a perspective view schematically showing the internal structure of the polarised light separating film used as the main portion of the structure shown in Fig. 1.

Fig. 3 is a schematic view illustrating the operation of the polarised light separating film of Fig. 2.

Fig. 4 is a sectional view of the structure of an electronic wristwatch used as an embodiment of the timepiece in accordance with the present invention.

Fig. 5 is a plan view of the movement used in the electronic wristwatch of Fig. 4.

Fig. 6 is a sectional view of the movement of Fig. 5.

Fig. 7 is a schematic view of the main portion of another embodiment of a display device in accordance with the present invention.

Fig. 8 is a schematic view of the main portion of still another embodiment of a display device in accordance with the present invention.

Fig. 9 is a schematic view of the main portion of a conventional display device.

Fig. 10 is a schematic view of the main portion of alternate embodiment 1 of a display device in accordance with the present invention.

Fig. 11 is a schematic view of the main portion of alternate embodiment 2 of a display device in accordance with the present invention.

Fig. 12 is a schematic view of the main portion of alternate embodiment 3 of a display device in accordance with the present invention.

Fig. 13 is a schematic view of the main portion of alternate embodiment 4 of a display device in accordance with the present invention.

Fig. 14 is a schematic view of the main portion of alternate embodiment 5 of a display device in accordance with the present invention.

### (1. Display device)

To achieve the above object, a display device of the present invention comprises first polarising splitter means which transmits therethrough a light ray component linearly polarised in one direction while not transmitting therethrough a light ray component linearly polarised in a direction perpendicular to the one direction, polarisation axis varying means, disposed at a position for receiving the linearly polarised light ray transmitted from the first polarising splitter means, for selecting between a state in which a polarisation axis is varied and a state in which the polarisation axis is not varied, and second polarising splitter means, diametrically opposed to the first polarising splitter means with the polarisation axis varying means interposed therebetween, for transmitting a light ray component linearly polarised in one direction and reflecting a light ray component linearly polarised in a direction perpendicular to the one direction, wherein the surface of the second polarising splitter means facing the polarisation axis varying means is a smooth surface that reflects a light ray in specular reflection.

### (2. Electronic watch)

An electronic watch of the present invention comprises first polarising splitter means which transmits therethrough a light ray component linearly polarised in one direction while not transmitting therethrough a light ray component linearly polarised in a direction perpendicular to the one direction, polarisation axis varying means, disposed at a position for receiving the linearly polarised light ray transmitted from the first polarising splitter means, for selecting between a state in which a polarisation axis is varied and a state in which the polarisation axis is not varied, second polarising splitter means, diametrically opposed to the first polarising splitter means with the polarisation axis varying means interposed therebetween, for transmitting a light ray component linearly polarised in one direction, and reflecting a light ray component linearly polarised in a direction perpendicular to the one direction, and light emitting means arranged on the side of the second polarising splitter means opposite to the polarisation axis varying means.

In the above arrangements, the first polarising splitter means is constructed of an ordinary polariser. The ordinary polariser means a film member which outputs a light ray linearly polarised in one direction in response to an incident natural light, and may be produced by interposing a polariser layer between protective layers of TAC (cellulose triacetate).

The polarisation axis varying means is constructed of a liquid crystal element, for example. Liquid crystals may be any of variety of liquid crystals including a TN (Twisted Nematic) liquid crystal, an STN (Super-Twisted Nematic) liquid crystal, and an ECB (Electrically Controlled Birefringence) liquid crystal. The STN liquid crystals include the one employing colour compensation, optically anisotropic material, such as an F-STN (Film Compensated Super-Nematic) liquid crystal.

The second polarising splitter means may be one of (1) the polarising splitter film of a multi-layered structure of films of the type disclosed in International Publication Nos. W095/17692 and W095/27919, (2) a polarising splitter having a cholesteric liquid crystal with a (1/4) λ plate on one side or on both sides, (3) a polarising splitter member for splitting a light into a reflected polarised light and a transmitted polarised light taking advantage of the Brewster's angle (in the manner described in SID 92 DIGEST, pages 427 to 429) and (4) a polarising splitter member employing the hologram.

The above described display device and electronic watch are related by the use of the second polarising splitter means instead of a polariser arranged behind the polarisation axis varying means in the conventional electronic watch. Use is made of the smooth surface of the second polarising splitter means facing the polarisation axis varying means to reflect a light ray in specular reflection.

The polariser has generally the function of transmitting a light ray component linearly polarised in one direction while not transmitting a light ray component other than light ray by absorption, and in contrast, the second polarising splitter means transmits a light ray component linearly polarised in one direction while reflecting a light ray component perpendicular to it, particularly, totally reflecting (in specular reflection) the light ray linearly polarised in a direction perpendicular to the polarisation axis.

With the second polarising splitter means substituted for the ordinary polariser, a light ray, which would be conventionally absorbed or dispersed, is reflected contributing to the displaying and brightening the background colour and numeric information and the like in the electronic watch. When the second polarising splitter means is provided with the smooth surface to reflect a light ray in specular reflection without arranging a light scattering layer, namely, a light diffusion layer on the front side (viewing side) of the second polarising splitter means, the light ray reflected in specular reflection gives a sufficient amount of light to the viewer without attenuation. When a light scattering layer (light diffusion layer) is arranged on the front side of the second polarising splitter means, the light ray specularly reflected by the second polarising splitter means is scattered, becoming soft but at a sufficient level to the viewer.

The specularly reflected light ray from the second polarising splitter means is presented either as the background colour or as the colour for the numeric information and the like depending on the setting of the polarisation axis of the first polarising splitter means, and in either case, the display device and watch present a glossy, silver-metallic colour, high-quality display. In an ordinary electronic watch, the information display area for numeric information and the like is relatively small in area to the background colour area, and the high-quality display is even more enhanced with the background colour presented by the specularly reflected light ray.

### (3. Electronic watch)

An electronic watch of the present invention comprises a lamination of a first polariser which transmits a light ray component linearly polarised in a first direction while not transmitting a light ray component linearly polarised in a second direction perpendicular to said first direction, a twisted nematic liquid crystal layer which rotates a polarisation axis in an off state while not rotating the polarisation axis in an on state, a second polariser which transmits a light ray component linearly polarised in a third direction while reflecting, in specular reflection, a light ray component linearly polarised in a fourth direction perpendicular to said third direction, a first optical element, a reflective layer, and light emitting means laminated in the above order.

With this arrangement, the electronic watch incorporating a bright second polariser for specular reflection becomes a compact and low power-consumption one.

### (4. Electronic watch)

In the electronic watch (3), the reflective layer irregularly reflects a light ray travelling from the second polariser to the light emitting means.

With this arrangement, the irregular reflection on the reflective layer makes the external light opaque white, presenting a bright white background or a bright segment colour.

### (5. Electronic watch)

In the electronic watch (4), the first optical element is a light absorbing layer.

With this arrangement, when the external light is used, the polarised light ray component transmitted through the second polarising splitter means, out of the external light, is absorbed by the light absorbing layer, and the polarised light component transmitted through the second polarising splitter means is irregularly reflected by the reflective layer, and is further absorbed by the light absorbing layer, light attenuation increases, and a light ray component that is again transmitted through the second polarising splitter means is substantially reduced, thereby keeping a black colour. When the light emitting means is used, the light ray from it is transmitted through the light absorbing layer once, and travels to the second polarising splitter means, and thereby suffers less attenuation. The emission colour itself is seen from the outside.

### (6. Electronic watch)

In the electronic watch (4), the first optical element is a coloration layer.

With this arrangement, when the external light is used, the polarised light ray component transmitted through the second polarising splitter means (the second polariser) is transmitted through the coloration layer, the reflective layer and the coloration layer and then the second polarising splitter means again and exits externally. For this reason, the colour of the polarised light ray component reflected from the second polarising splitter means (a silver-mirror colour when no second optical element is arranged between the TN liquid crystal layer and the second polarising splitter means, and a white colour when a second optical element such as a diffusion layer is arranged between the TN liquid crystal layer and the second polarising splitter means) contrasts with the colour of the polarised light ray component transmitted through the second polarising splitter means, improving the contrast of the display.

Available as the coloration layer is an orange filter, a green filter or the like, and the colour of the polarised light ray component transmitted through the second polarising splitter means is orange when an orange filter is used, and green when a green filter is used.

In this case, the emission colour of the light emitting means is light green when an EL device is used, and is red, green or the like when an LED is used, and a great difference is caused between the emission colour (with the light emitting means on) resulting from the light emitting means in the same liquid crystal layer (in on or off) and the colour from the external light (the light emitting means off), calling the viewer's attention.

### (7. Electronic watch)

In the electronic watch (5), a second optical element is arranged between the twisted nematic liquid crystal layer and the second polariser.

### (8. Electronic watch)

In the electronic watch (7), the second optical element is either a light diffusion layer or a light scattering layer.

### (9. Electronic watch)

In the electronic watch (6), a second optical element is arranged between the twisted nematic liquid crystal layer and the second polariser.

### (10. Electronic watch)

In the electronic watch (9), the second optical element is either a light diffusion layer or a light scattering layer.

In these arrangements (7-10), when the external light is used, the polarised light ray component specularly reflected from the second polarising splitter means, out of the external light, is diffused or scattered, and looks white to the user, and an easy-to-see electronic watch results with a bright and soft tone colour display but not loud tone such as silver.

### (11. Electronic watch)

In the electronic watch (5) or (8), the light absorbing layer is a tracing paper.

The light absorbing layer is easily formed using a commercially available tracing paper.

### (12. Electronic watch)

In the electronic watch (5), the light absorbing layer has a visible light transmittance within a range from 40% to 80%.

### (13. Electronic watch)

In the electronic watch (12), the light absorbing layer has a visible light transmittance within a range from 55% to 65%.

With the arrangement in the electronic watch (12) through (13), the light ray of the external light transmitted through the second polarising splitter means is balanced with the emission of the light emitting means transmitted through the second polarising splitter means, and an easy-to-see electronic watch results.

### (14. Electronic watch)

In the electronic watch (6), means arranged between the coloration layer and the reflective layer transmits a light ray from the light emitting means while irregularly reflecting a light ray from the coloration layer.

With this arrangement, a copy paper sheet is preferred as the means. Especially when an LED device as the light emitting means is used as a side light, a slant guide plate is used to guide the emission of the LED and to reflect it toward the TN liquid crystal, the light ray from the LED is made uniform and transmitted, and the light from the coloration layer is irregularly reflected.

### (15. Electronic watch)

In the electronic watch (11), the light emitting means comprises an electroluminescence device.

### (16. Electronic watch)

In the electronic watch (13), the light emitting means comprises a light emitting diode.

### (17. Electronic watch)

In the electronic watch (10), the light emitting means comprises an electroluminescence device.

### (18. Electronic watch)

In the electronic watch (6), the light emitting means comprises an electroluminescence device.

### (19. Electronic watch)

In the electronic watch (14), the light emitting means comprises a light emitting diode.

With the arrangements (15) through (19), the light emitting means employs a surface emitting type EL device. A compact electronic watch is thus provided. The electronic watch features a low power consumption with the surface emitting LED device or a side light LED device.

By introducing a colour difference between the colour of the light ray transmitted through the second polarising splitter means and the external light reflected from the second polarising splitter means, the viewer's attention to the electronic watch is easily called.

Since the colour of the segment is the emission colour of the light emitting means, a bright display results.

### (20. Electronic watch)

In the electronic watch (2), a light-transmissive colour layer is arranged between the polarisation axis varying means and the light emitting means.

With the colour layer arranged between the polarisation axis varying means and the second polarising splitter means, a glossy metallic colour not only of silver but also of other various colour is introduced. Particularly, with a golden layer as the colour layer arranged, a golden metallic tone is introduced contributing to a high-quality display.

To form a colour layer, a colour film of an appropriate colour is glued onto, or a metal powder or other colour powder is sprayed at a density level still assuring a light transmissivity onto, at least one of the surface of the second polarising splitter means facing the polarisation axis varying means and the surface of the polarisation axis varying means facing the second polarising splitter means.

### (21. Electronic watch)

In the electronic watch (3), the light emitting means comprises an electroluminescence device or a light emitting diode, and emits a light ray of at least one of orange, red, light green, and green to the twisted nematic liquid crystal layer via the second polariser.

### (22. Electronic watch)

The electronic watch of the present embodiment comprises a lamination of a first polariser which transmits a light ray component polarised in a direction parallel to a first polarisation direction while absorbing a light ray component polarised in perpendicular to the first polarisation direction, a liquid crystal layer which rotates the polarisation direction of an incident light ray by 90 degrees in a non-voltage applied state while not rotating the polarisation direction of the incident light ray in a voltage-applied state, polarising splitter means which transmits a light ray component polarised in a second polarisation direction while reflecting a light ray component polarised in perpendicular to the second polarisation direction, a first optical element, reflective means for irregularly reflecting a light ray, and light emitting means for emitting an emission colour light laminated in the above order, wherein when the first polarisation direction is parallel to the second polarisation direction, a first colour light ray from the external light in the non-voltage applied state has the colour of the light ray reflected from the polarising splitter means while a second colour light ray from the external light in the voltage-applied state has the colour of the light ray transmitted through the first optical element; when the first polarisation direction is parallel to the second polarisation direction, a third colour light ray from the emission of the light emitting means in the non-voltage applied state is black while a fourth colour light ray from the emission of the light emitting means in the voltage-applied state has the colour of the light ray transmitted through the first optical element; when the first polarisation direction is perpendicular to the second polarisation direction, a fifth colour light from the external light in the non-voltage applied state has the colour of the light ray transmitted through the first optical element while a sixth colour light ray from the external light in the voltage-applied state has the colour of the light ray reflected from the polarising splitter means; and when the first polarisation direction is perpendicular to the second polarisation direction, a seventh colour light from the emission of the light emitting means in the non-voltage applied state has the colour of the light ray transmitted through the first optical element while an eighth colour light from the emission of the light emitting means in the voltage applied state is black.

### (23. Electronic watch)

In the electronic watch (22), a light scattering layer or a light diffusion layer is arranged between the liquid crystal layer and the polarising splitter means and wherein both the first colour light ray and the sixth colour light ray are white.

### (24. Electronic watch)

In the electronic watch (22), the first optical element is a light absorbing layer;
both the second colour light ray and the fifth colour light ray are black; and both the fourth colour light ray and the seventh colour light ray have the emission colour.

### (25. Electronic watch)

In the electronic watch (22), the first optical element is a coloration layer; both the second colour light ray and the fifth colour light ray are the colour attributed to the coloration layer; and both the fourth colour light ray and the seventh colour light ray have the emission colour that is coloured through the transmission through the coloration layer.

When a coloration layer as the first optical element is provided with a backlight on, the light ray exiting outwardly is an emitted light coloured through the coloration layer. If the EL device is used in this case, the emission colour of the EL is a light colour and a resulting colour looks like a mixed colour of the emission colour and the colour of the coloration layer because the wavelength characteristics of EL is mild. On the other hand, the wavelength characteristics of the LED are sharp, and the emission of the LED is not efficiently transmitted through the coloration layer if it fails to match the coloration layer. The coloration layer for the LED is preferably a band pass filter having wavelength characteristics.

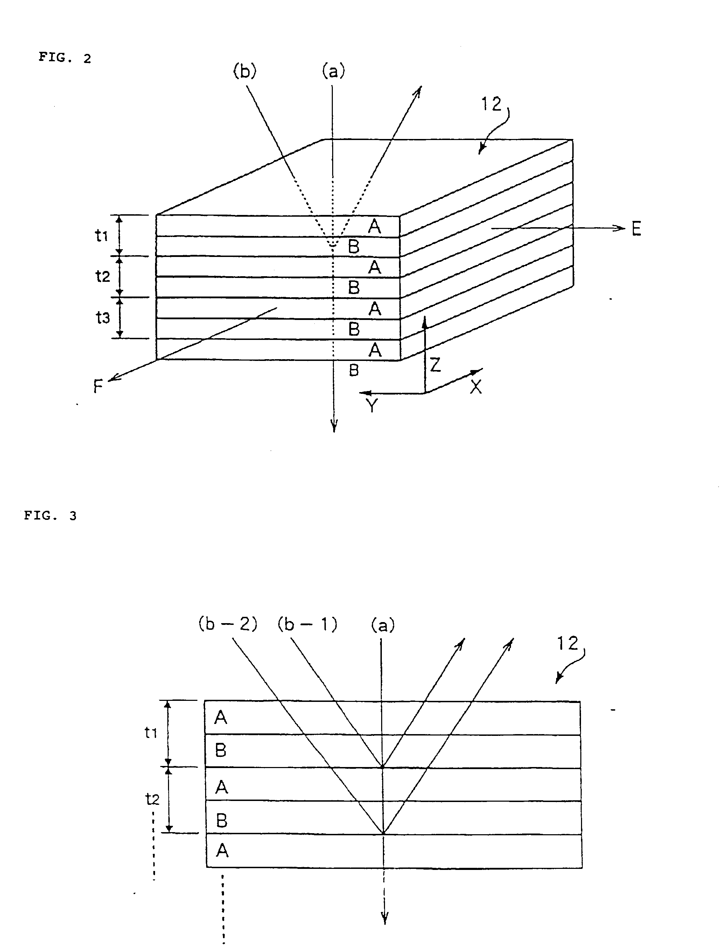

In addition to the aforementioned structural element:
(1) It is desirable that a light-scattering layer be provided opposite the transmitting polarised light polarisation axis varying means with the second polarised light separating means interposed therebetween, that is at the back side of the second polarised light separating means with respect to the viewer. With the light-scattering layer provided, when the background colour is a glossy metallic colour, numerical information or the like can be displayed in a non-glossy colour that stands out, whereas when numerical information or the like is displayed in a glossy colour, a non-glossy background colour can be produced to make the numerical information, or the like, stand out.
(2) In addition to the aforementioned structural elements, a light-emitting means for emitting light to the transmitting polarised light polarisation axis varying means through the second polarised light separating means may be provided. The light-emitting means which may be used include: 1) a planar light-emitting member like an electroluminescence (EL) member; 2) a light-emitting device in which a cold cathode, being a linear light source, is disposed at a side end face of a light guide plate having a planar light-emitting surface; and 3) a light emitting device or the like in which a plurality of light emitting diodes (LEDs), being point-like light sources, are disposed in a row at a side end face of a light guide plate having a planar light emitting surface.
   When a light-emitting means is used as an additional structural element as in the present embodiment, the viewer can freely select a display method, that is the display method using external natural light or that using a light-emitting means. In addition, when, as in the present invention, the second polarised light separating means, which transmits a linearly polarised light component oriented in a certain direction and reflects all other linearly polarised light components, is used, instead of an ordinary polariser, numerical information or the like can be displayed in various forms, and various background colours can be produced, compared to conventional electronic timepieces in which two polarisers are used for displaying information or producing a background colour.
   For example, in conventional devices, when the display method is switched between that using external natural light and that using the light emitting means, there is not much difference between the background colours and the forms of display of such information as numerical information. For example, when numerical information or the like is displayed in a dark colour, such as black, on a background with a colour corresponding to the reflected colour or the emitted colour of the light emitting element 54, and the display method is switched, only the way in which the background colour is produced by the light emitting element 54 is changed, so that the background colour is either produced by the reflected colour or the emitted colour of the light emitting element 54, ordinarily causing the background colour to be the same in both cases. Similarly, when numerical information or the like is displayed in a colour corresponding to the reflected colour or emitted colour of the light emitting element 54 on a background with a dark colour, such as black, only the way in which the colour of the numerical information or the like is produced by the light emitting element 54 is changed, so that the colour of the numerical information or the like is produced either by the reflected colour or the emitted colour of the light emitting element 54.
   Compared to the above-described conventional devices, the electronic timepiece of the present invention comprising a light emitting means is constructed in such a way as to allow the background colour and the form of display of the numerical information or the like to be changed drastically, when the display method switches between that using external natural light and that using the light emitting means. This change may surprise the viewer.
   For example, when the display method is switched from that using external natural light to that using the light emitting means, the numerical information or the like displayed in a loud colour on a background with a glossy metallic tone that gives quality appearance to the display, is displayed in a bright colour produced by the light emitting means on a background having a dark colour, such as black. Such a change can surprise the viewer.
(3) It is desirable to construct the light emitting means so that it emits at least one of the following colours, orange, red, or yellowish green. In the electronic timepiece of the present invention, numerical information or the like is displayed in the colour emitted by the light emitting means. Since the aforementioned colours stand out against black, when the light emitting means is made to emit any one of the aforementioned colours to display numerical information or the like in any one of these colours, the displayed information becomes bright and easy to read, thereby easily attracting the human eye.
(4) In the foregoing description, nothing was particularly stated about whether the light emitting means is to emit a single colour or a plurality of colours. When the light emitting means is constructed to emit a plurality of colours, numerical information or the like can be displayed in several colours in one electronic timepiece, so that displays of a greater variety of colours can be realised.
(5) When the aforementioned light emitting means is used to emit a plurality of colours, the colour emitted by the light emitting source itself may be changed, and the light emitting means may be composed of a white light emitting source and a colour filter.
(6) As mentioned above, various polarised light separating elements can be used for the second polarised light separating means, but it is desirable that a polarised light separating film, formed from a film of the type disclosed in International Patent Publication Nos. WO95/17692 or WO95/27919, be used for the second polarised light separating means. For example, the polarised light separating film, shown in Fig. 2, may be used, which has a multi-layered structure formed by alternately laminating two types of layers A and B. Any two adjacent layers A and B have the same refractive index in a certain direction, but different refractive indices in a direction perpendicular to the certain direction, and each of the individual layers have different thickness.

In Fig. 2, three axial directions X, Y, and Z, which are perpendicular to each other, are defined. A multi-layered structure is formed by subjecting layers A and B to, for example, extrusion molding, and stretching them in a certain direction (such as direction X), but not in direction Y when the stretching direction is in direction X. In other words, the X-axis direction corresponds to the stretching direction, whereas the Y-axis direction is oriented transversally with respect to the stretching direction. Material B has a refractive index n_{B} (such as 1.64), which essentially does not change when stretching is performed. On the other hand, the refractive index of material A changes when stretching is performed. For example, uniaxially stretching a sheet made of material A causes it to have a refractive index n_{ΔX} (such as 1.88) in the stretching direction (that is direction X) and a different refractive index n_{ΔY} (such as 1.64) in a transverse direction with respect to the stretching direction (that is, direction Y). Stretching the layered structure of Fig 2 formed of materials A and B in the direction X causes it to have a refractive index difference of Δn = 1.88 - 1.64 = 0.24 in the stretching direction. On the other hand, there is no difference between the refractive indices of the A and B layers in the direction Y perpendicular to the stretching direction, since Δn = 1.64 - 1.64 = 0. Since the layered structure has the aforementioned optical property, when light impinges upon the polarised light separating film 12, the polarised light component (a) of the incident light which is oriented in the direction of polarisation axis E passes through the polarised light separating film 12. On the other hand, the polarised light component (b) of the incident light which is oriented in the direction of absorption axis F directly strikes a surface having a refractive index difference Δn, so that it is reflected at the surface.

In addition, thicknesses t1, t2, t3,..., of each of the layers A and B differ slightly, so that, as shown in Fig. 3, light beams of different wavelengths, (b-1), (b-2), ..., can be reflected at the boundary surfaces between layers A and B. In other words, a multi-layered structure consisting of layers A and B with different thicknesses allows light consisting of various wavelengths to be efficiently reflected. When the thicknesses are combined in such a way as to allow reflection of all wavelengths, white light is reflected.

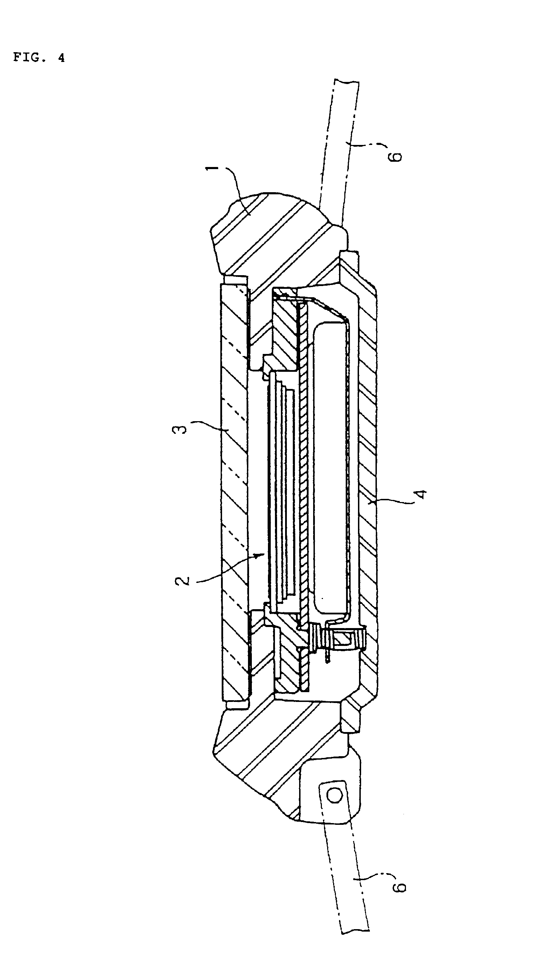

Fig. 4 is a sectional view of the structure of an embodiment of a electronic wristwatch used to describe a display device in accordance with the present invention. The wristwatch comprises, for example, a plastic case 1, a movement 2 contained in the case 1, a glass plate 3 affixed to the case 1 and disposed above the movement 2, and a back cover 4 affixed to the movement 2. Reference numeral 6 denotes a wristband.

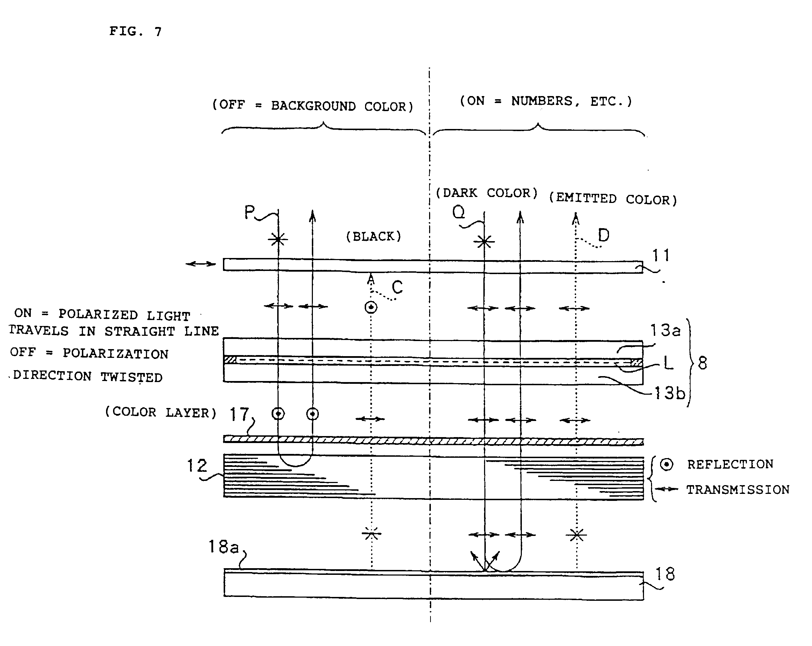

As shown in Fig. 6, the movement 2 includes a panel frame 7; a liquid crystal panel 8, serving as a transmitting polarised light polarisation axis varying means, supported by the panel frame 7; a polariser 11, serving as a first polarised light separating means, affixed to the outside surface (upper surface in the figure) of the liquid crystal panel 8; a polarised light separating film 12, serving as a second polarised light separating means, disposed opposite the polariser 11 with the liquid crystal panel 8 interposed therebetween; a backlight 18, serving as a light-emitting means, disposed at the bottom surface side of the polarised light separating film 12; and a battery 9.

The polariser 11 is an ordinary polariser that transmits only linearly polarised light oriented in a certain direction, and blocks all other types of linearly polarised light by absorption, scattering, or the like. As shown in Fig. 2, the polarised light separating film 12 is a laminated structure of a plurality of thin films. As mentioned above, the polarised light separating film 12 transmits only linearly polarised light oriented in a certain direction, and blocks all other types of linearly polarised light, not by absorption or the like, but by reflection. The polarised light separating film 12 transmits, in particular, linearly polarised light oriented in a direction perpendicular to the transmitting polarised light polarisation axis by total reflection.

In the polarised light separating film 12 of the present embodiment, the thickness of each layer, t1, t2, t3, etc., is set so as to allow reflection of light of all wavelengths within the visible region (shown in Fig. 2). The surface of the polarised light separating film 12 opposing the liquid crystal panel 8 is a smooth surface which specularly reflects light. Optical elements, such as a light scattering plate or a light dispersing plate, are not disposed between the polarised light separating film 12 and the liquid crystal panel 8.

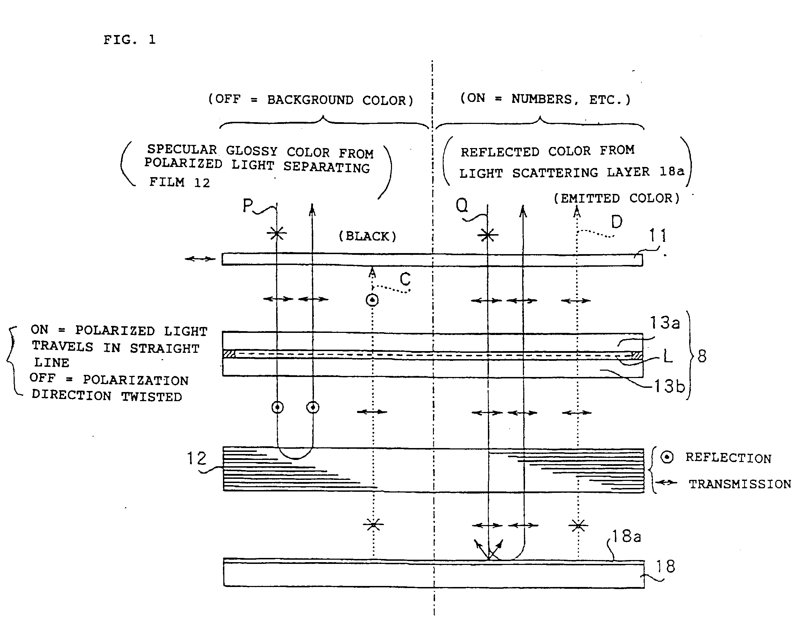

The backlight 18 of Fig. 6 is composed of, for example, an electroluminescence (EL) member which is a planar light-emitting member. As shown in Fig. 1, one surface of the backlight 18 has a light scattering layer 18a for scattering light, and, in the present embodiment, is grey.

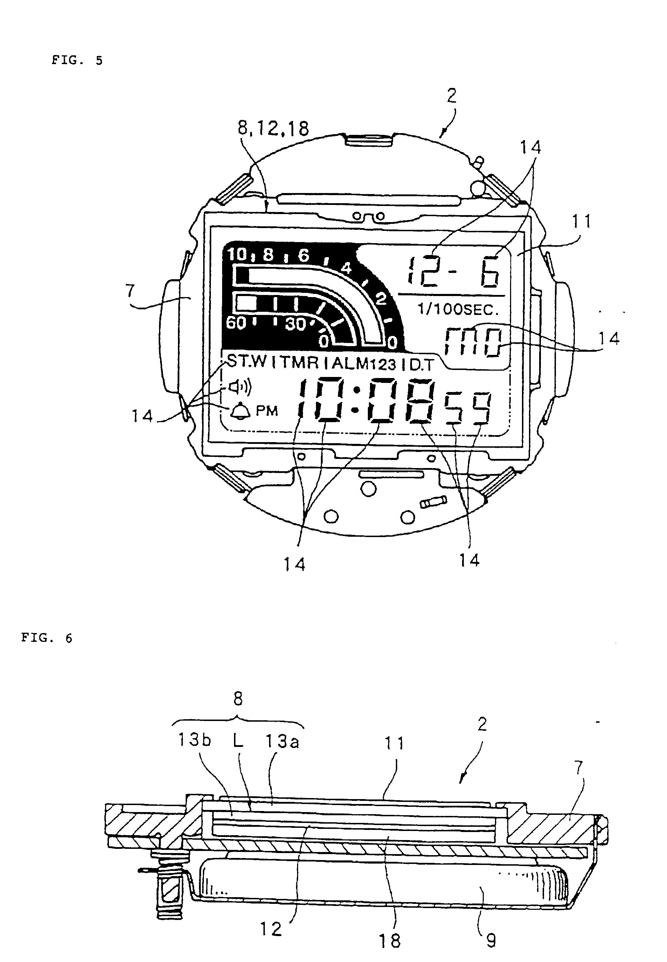

In Fig. 6, the liquid crystal panel 8 comprises a pair of opposing transparent glass substrates 13a and 13b, with a so-called cell gap formed therebetween. Liquid crystal, such as a twisted nematic (TN) liquid crystal L, is filled in the cell gap. As shown in Fig. 5, a plurality of transparent electrodes 14 are formed on each of the glass substrates 13a and 13b in order to display, for example, numbers or characters. In the present embodiment, each of the transparent electrodes is divided into seven segments used for displaying one digit.

A predetermined voltage can be applied between the opposing pairs of transparent electrodes 14 formed on the pair of glass substrates 13a and 13b. The liquid crystal L is set in either of two alignment states depending on whether a voltage is applied (ON) or not applied (OFF). In the present embodiment, when the liquid crystal is set in an on state, the axis of the linearly polarised light is not changed, whereas when the liquid crystal is set in an off state, the axis of the linearly polarised light is twisted 90 degrees.

A description will now be given of the operation of the electronic wristwatch having the above-described structure. The wristwatch has two types of light sources, backlight 18 and external natural light. When background colour of the wristwatch is to be produced, the area of the liquid crystal panel 8 corresponding to the background is turned off, whereas when numerical information or the like is to be displayed, the area of the liquid crystal panel 8 corresponding to where the numerical information is to be displayed is turned on. The uses of external natural light and backlight are separately described below.

### (When external natural light is used)

When outside natural light is used, particularly for producing background colour, the liquid crystal panel 8 of Fig. 1 is set in an off state. Then, as indicated by arrow P in the same figure, the linearly polarised light component of the external light or natural light oriented in a direction parallel to the plane of the figure passes through the polariser 11, and its polarisation direction is twisted 90 degrees by the liquid crystal panel 8 set in an off state, causing the linearly polarised light to be oriented in a direction perpendicular to the plane of the figure. The linearly polarised light component is reflected by each of the layer surfaces in the polarised light separating film 12 according to wavelength. The reflected light passes successively through the liquid crystal panel 8 and the polariser 11 for producing the background colour which is perceived by the viewer.

In the present embodiment, the surface of the polarised light separating film 12 opposing the liquid crystal panel 8 is formed into a smooth surface which specularly reflects light. Since optical elements, such as a light-scattering plate or a light-dispersing plate, are not disposed between the polarised light separating film 12 and the liquid crystal panel 8, the light, reflected by the polarised light separating film 12, is perceived by the viewer as a colour with a glossy silver metallic tone. The background colour gives the display a quality appearance.

When external natural light is to be used to display numerical information or the like, the liquid crystal panel 8 is set in an on state. Then, as indicated by arrow Q, the linearly polarised light component which is parallel to the plane of the figure is separated from the external light by the polariser 11, and passes through the liquid crystal panel 8. Here, the liquid crystal panel 8 is in an on state, so that the polarisation direction of the linearly polarised light component stays parallel to the plane of the figure. Therefore, the linearly polarised light component passes through the polarised light separating film 12, and is irregularly reflected by the light-scattering layer 18a at the surface of the backlight 18. Seen from the outside, this portion has a non-glossy dark colour, or is grey, so that numerical information or the like is displayed in a non-glossy dark colour, or grey, on a background with a glossy silver metallic tone, which is perceived by the viewer.

The linearly polarised light, which is irregularly reflected by the light-scattering layer 18a, includes a light component portion whose polarisation axis shifts. This light component portion is reflected by the polarised light separating film 12 and travels back to the light-scattering layer 18a. It is repeatedly reflected until its polarisation axis matches the polarisation axis of the polarised light separating film 12. When the axes match, the light component portion travels upward and through the display device. In contrast to this, in the conventionally structured display device using an ordinary polariser instead of the polarised light separating film 12, the light component portion whose polarisation axis is shifted is absorbed by the polariser, so that it does not travel upward and through the display device. In the present embodiment using the polarised light separating film 12, the light reflected by the light-scattering layer 18a is efficiently led to the outside, so that a bright and easy-to-read display can be provided.

As can be understood from the foregoing description, when external natural light is used, numerical information can be displayed in a non-glossy grey colour onto a background with a glossy silver metallic tone. Forming the light-scattering layer 18a of the backlight 18 with an appropriate colour other than grey allows numerical information or the like to be displayed in any colour other than grey.

### (When backlight 18 is used)

When backlight 18 is used for producing, in particular, background colour, the backlight 18 is turned on, and the liquid crystal panel 8 is set in an off state. Then, as indicated by arrow C, the linearly polarised light component oriented parallel to the plane of the figure is separated from the light or random polarised light emitted from the backlight 18 by the polarised light separating film 12. Thereafter, the polarisation direction of the linearly polarised light component is twisted 90 degrees by the liquid crystal display panel 8 set in an off state, causing the linearly polarised light component to be oriented in a direction perpendicular to the plane of the figure. The linearly polarised light component, which is either absorbed or scattered by the polariser 11, is prevented from travelling out the display device, so that from the outside the background appears black.

When backlight 18 is to be used to display numerical information or the like, the backlight 18 is turned on and the liquid crystal panel 8 is set in an on state. Then, as indicated by arrow D, the linearly polarised light component oriented parallel to the plane of the figure is separated from the light of the backlight 18 by the polarised light separating film 12. The linearly polarised light component passes through the liquid crystal panel 8 in an on state, and then through the polariser 11, whereby numerical information or the like is displayed. In the present embodiment, a grey light-scattering layer 18a is formed at the surface of the backlight 18, so that when the backlight 18 emits white light, numerical information or the like is displayed in grey.

As can be understood from the foregoing description, when, for example, it is dark so that there is not external natural light that can be made to enter the display device, the light emitted from the backlight 18 is used to display numerical information, such as time or the like, on a black background. When the backlight 18 is made to emit a red colour, the information is displayed in red on a black background. Information on such displays is much easier to read than in conventional displays in which at night information is displayed in black on a white background.

In addition, such displays are suitable for use in, for example, a divers watch for giving a warning to the diver. More specifically, when it becomes necessary to give a warning to the diver as regards the water pressure or the diving time, the backlight 18 can be made to emit a colour that easily attracts the human eye, such as yellow, to produce a yellow colour on a black background, with such a display form being effective in warning the diver.

The backlight 18 may be made to emit light of various colours in accordance with the demands of the viewer. When the backlight 18 is made to emit orange light, red light, or yellowish green light, the displayed information can be easily read, since these colours can be easily distinguished from a black background.

The display form of an electronic timepiece using external light greatly differs from the display form of an electronic timepiece using backlight 18, so that the electronic timepiece easily attracts the attention of the viewer, making the two forms of display extremely advantageous.

The backlight 18 may be made to emit a single colour from the entire surface thereof, or be made to emit as a whole multiple colours from several divided sections thereof each emitting a different colour. When numerical information or the like is to be displayed using the backlight 18 set to emit multiple colours, various information can be displayed in different colours, so that multiple forms of display that meet various demands can be realised.

In the conventional device of Fig. 9, when background colour is to be produced using external light, the external light passes through the polariser 53 twice, as indicated by arrow P. When the external light passes through the polariser 53, the intensity of the white colour of the background may be reduced, which may darken the display of the wristwatch. In the wristwatch of the present embodiment, however, as indicated by arrow P of Fig. 1, external natural light is reflected by the polarised light separating film 12, and the reflected external light is used to produce the background colour. Therefore, less light is absorbed by the polariser, so that the light has high intensity, which causes the background to become bright. When background colour with a glossy metallic tone, is to be produced, it is very important that the light be very intense. From this viewpoint, it is advantageous to use the structure of the present embodiment.

Fig. 7 is a view showing the main portion of another embodiment of a display device and an electronic timepiece in accordance with the present invention. This embodiment differs from the previously described embodiment of Fig. 1 in that a transmissive colour layer 17 is disposed between the liquid crystal panel 8 and the polarised light separating film 12. In the present embodiment, the colour layer 17 can be used to produce, not only a silver display, but various other colour displays with a glossy metallic tone. For example, a metallic red colour display, a metallic green colour display, and various other metallic colour displays may be produced. When a gold layer is used as the colour layer, a gold display with a glossy metallic tone can be produced. In such a case, the display is given quality appearance.

The colour layer 17 is formed, for example, by affixing an appropriate colour filter to one surface of the polarised light separating film 12 and/or one surface of the glass substrate 13b of the liquid crystal panel 8, or by blowing fine metallic particles or other fine colour particles, with a density that provides the proper translucency, onto one surface of the polarised light separating film 12 and/or one surface of the glass substrate 13b of the liquid crystal panel 8.

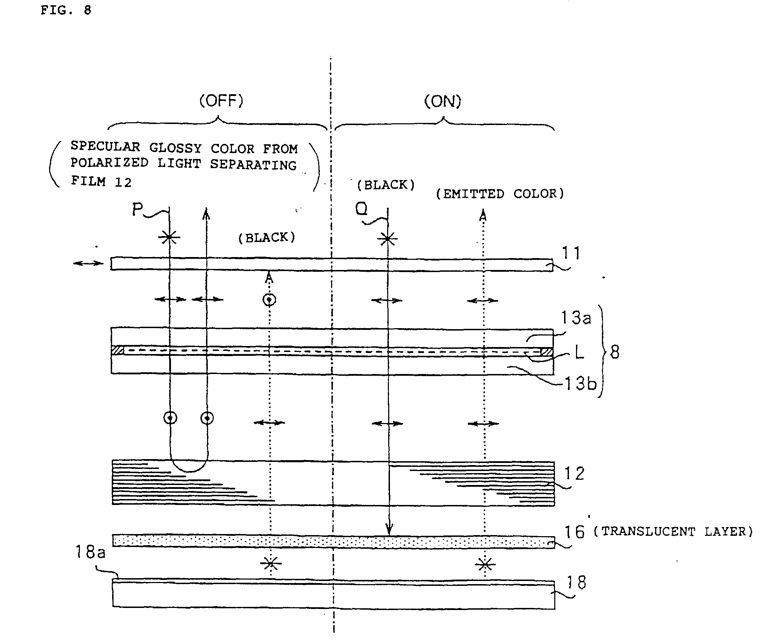

Fig. 8 is a view showing the main portion of still another embodiment of a display device and an electronic timepiece in accordance with the present invention. The present embodiment differs from the previously described embodiment of Fig. 1 in that a translucent layer 16 is disposed between the polarised light separating film 12 and the backlight 18. The translucent layer 16 is formed of, for example, a grey light-absorbing material in a translucent state or a black light-absorbing material, and has a plurality of holes for transmitting light.

In the present embodiment, as indicated by arrow Q, when the liquid crystal panel is set in an on state in order to display numerical information or the like using external natural light, the linearly polarised light leaving the polarised light separating film 12 is either absorbed or scattered by the translucent layer 16, so that the portion where absorption or scattering occurs has a vivid black colour. In this case, compared to the case where numerical information or the like is displayed in a dark colour, such as grey, as a result of irregularly reflecting light from one surface of the backlight 18, as indicated by the arrow Q of Fig. 1, the numerical information or the like is displayed in a vivid black colour.

Although the present invention was described with reference to the preferred embodiments thereof, the present invention is not limited thereto, so that various modifications can be made within the scope of the claims of the present invention.

For example, although the display device was described using an electronic timepiece of Fig. 4 as an example, the present invention is applicable to various other types of display devices.

In the embodiment illustrated in Fig. 1, when external natural light is used, a glossy background colour is produced by light reflected from the polarised light separating film 12 and numerical information or the like is displayed on the glossy background colour in an ordinary non-glossy colour that is reflected from the light-scattering layer 18a. However, for example, when the polarisation axis of the polariser 11 is shifted 90 degrees, a background with a non-glossy colour can be produced by a non-glossy colour coming from the light-scattering layer 18a, and numerical information or the like with a glossy colour can be displayed on a non-glossy background colour by light reflected from the polarised light separating film 12.

In the present embodiments, the invention was described using a wristwatch. Obviously, the present invention can be used for any other electronic timepiece having a different structure, such as a stopwatch. A light-emitting element other than an EL element may be used for the light-emitting means.

Although in the present embodiments a TN liquid crystal panel was used as the transmitting polarised light polarisation axis varying means for selecting either a state in which the polarisation axis of the polarised light being transmitted is changed or a state in which the polarisation axis of the polarised light being transmitted is not changed, an STN liquid crystal panel or an ECB liquid crystal panel may also be used.

In addition, although a multi-layered structure consisting of a plurality of laminated thin films, such as that shown in Fig. 2, was used as the second polarised light separating means which transmits linearly polarised light oriented in a certain direction and reflects linearly polarised light oriented perpendicular thereto, there may also be used, for example: 1) a polarised light separating plate in which a (1/4)λ plate is provided at one or both sides of a cholesteric liquid crystal layer; 2) a polarised light separating member which separates polarised light components by reflection and transmission by setting the angle at the Brewster's angle (refer to pp. 427 to 429 of SID 92 DIGEST); and 3) a polarised light separating member utilising a hologram.

### (Alternate embodiment 1)

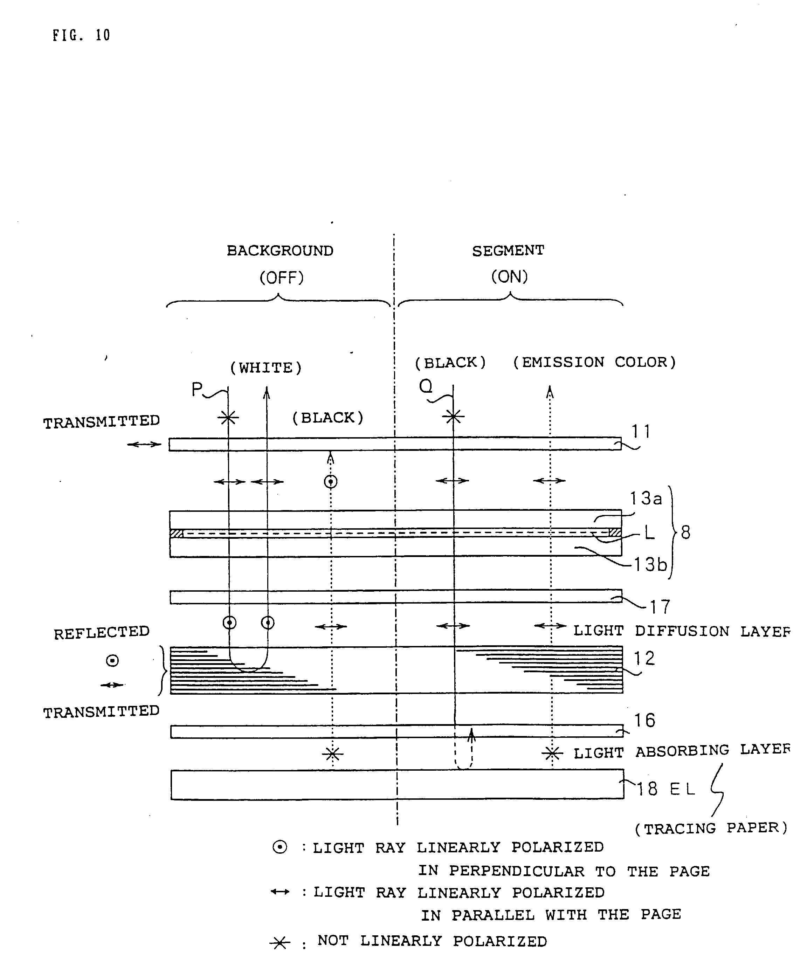

Referring to FIG. 10, a light diffusion layer 17 is substituted for the coloration layer 17 in FIG. 7, and a light absorbing layer 16 is substituted for the semi-transmissive layer 16 as the first optical element 1 shown in FIG. 8. A grey tracing paper is preferable as the light absorbing layer 16. As the light emitting means 18, a surface emitting, light green EL device is used. As shown, the polarisation axis of the polariser 11 is arranged in parallel with the polarisation axis of the polarisation splitter film 12.

When the external light rather than the emission of the EL device 18 is used, the light diffusion layer 17 diffuses the specular reflection light of the external light P from the polarising splitter means 12 in a non-voltage applied area (OFF area), and makes it look white from the outside. In a voltage-applied area (ON area), the light ray of the external light Q transmitted through the polarising splitter means 12 is absorbed by the light absorbing layer 16, and even if part of it is transmitted through the light absorbing layer 16, it is irregularly reflected from the reflective surface of an EL device 18, and a light ray component reaching the light absorbing layer 16 is absorbed by the light absorbing layer 16, and practically no light ray component exits outwardly, causing the display to look black.

When the emission of the EL device 18 is used, the polarised light ray rotated by 90 degrees through the TN liquid crystal layer 8 is absorbed by the polariser 11, remaining unable to exit outwardly, and looks black, because the polarisation axis of the polarising splitter means 12 is parallel to the polarisation axis of the polariser 11 in the non-voltage applied area (OFF area). In the voltage-applied area (ON area), the emission of the EL device 18 is transmitted through the light absorbing layer 16 because of its high energy level. Since the light absorbing layer 16 is grey, no coloration takes place, and the polarised light ray component transmitted through the polarising splitter film 12 is not rotated through the TN liquid crystal layer 8, and is thus transmitted through the polariser 11, and looks as the emission colour (light green).

### (Alternate embodiment 2)

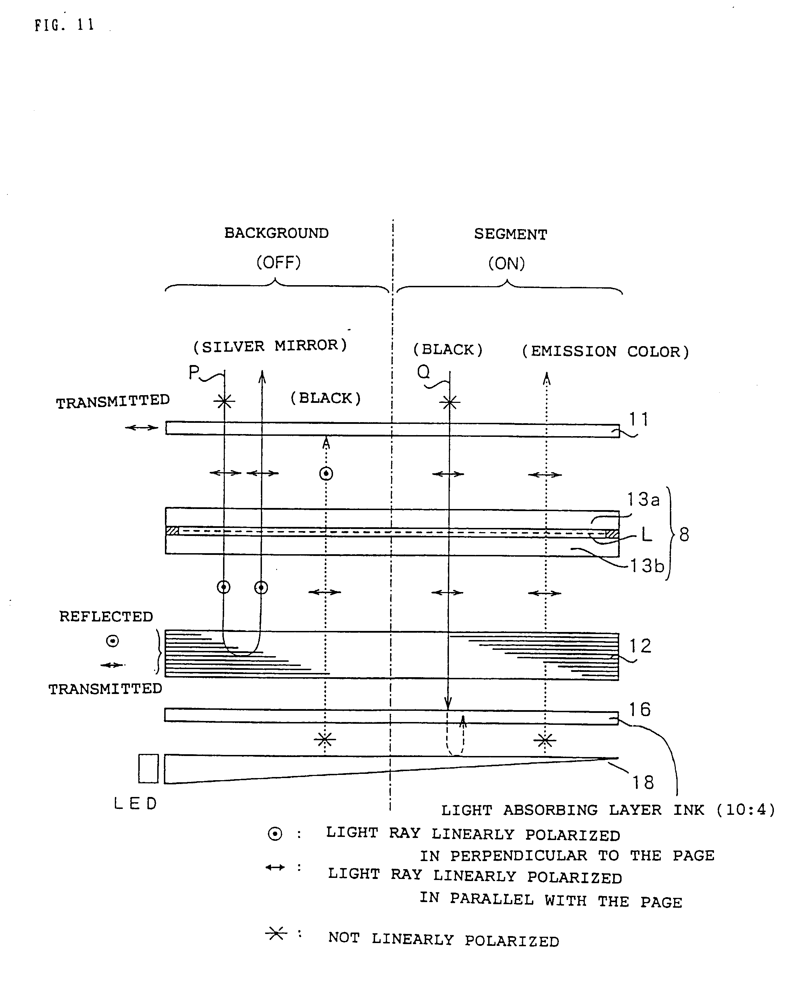

Referring to FIG. 11, a light absorbing layer 16 as the first optical element in FIG. 8 is substituted for the semi-transmissive layer 16. As the light absorbing layer a black inked paper having a visible light transmittance of 60% is used. A visible light transmittance is preferably within a range of 40% to 80%, and more preferably within a range of 55% to 65%. As the light emitting means 18, a side light red LED is arranged so that its light ray is guided by a light guide plate toward the light absorbing layer 16.

When the external light rather than the emission of the light emitting means (LED + side light) 18 is used, the specular reflection light ray of the external light P from the polarising splitter means 12 exits as is because no light diffusion layer 17 is used, and looks silver mirror toned from the outside. In the voltage-applied area (ON area), the light ray of the external light Q transmitted through the polarising splitter film 12 is absorbed by the light absorbing layer 16, irregularly reflected by the reflective surface of the side light 18, and further absorbed by the light absorbing layer 16, and most of the light ray fails to exit, looking black from the outside.

When the emission of the light emitting means 18 is used, no light ray exits outwardly and a black display is presented because the polarisation axis of the polarising splitter means 12 is parallel to the polarisation axis of the polariser 11 in the non-voltage applied area (OFF area) and because the light ray is rotated by 90 degrees through the TN liquid crystal 8 interposed therebetween. In the voltage-applied area (ON area), because of its high energy level, the emission is transmitted through the light absorbing layer 16 which does not colour the light ray because of its black ink, and looks as the emission colour as is, thus red, from the outside.

### (Alternate embodiment 3)

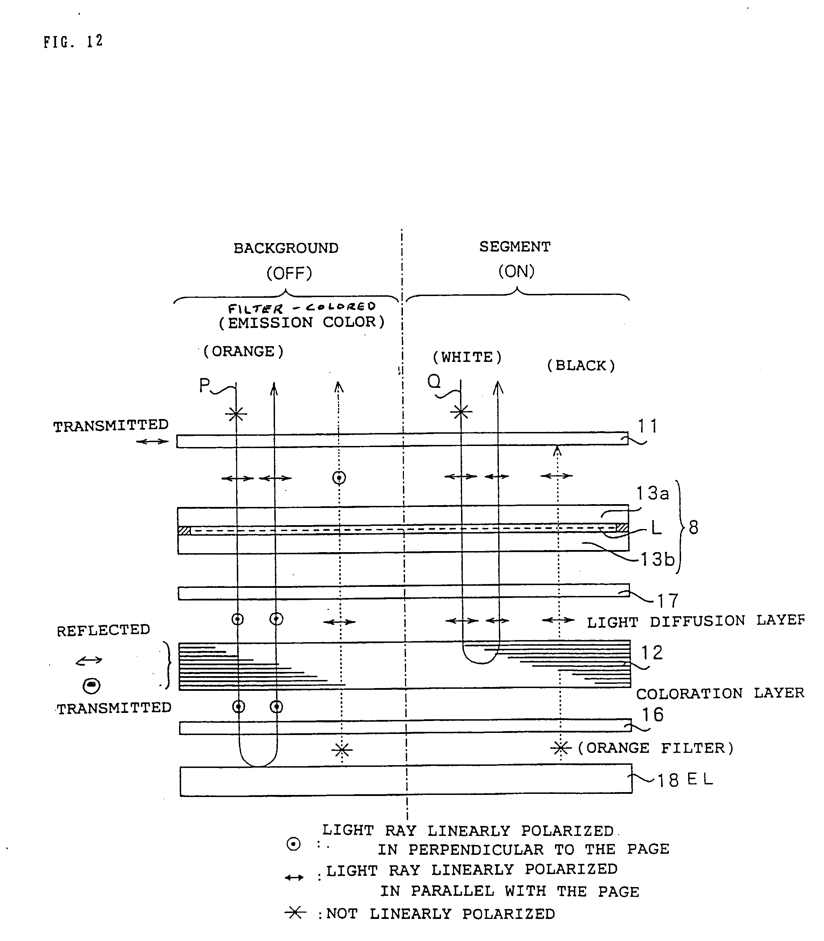

Referring to FIG. 12, a coloration layer 16 is substituted for the light absorbing layer 16 as the first optical element shown in FIG. 10. Used as the coloration layer 16 is an orange filter, and the light ray of the external light transmitted through the polarising splitter means 12 is coloured orange. A light green, surface emitting EL is used as the light emitting means 18. In this embodiment, the polarisation axes of the polariser 11 and the polarising splitter film 12 are mutually perpendicular.

When the external light rather than the emission of the light emitting means 18 is used, the light ray of the external light P transmitted through the polarising splitter film 12 passes twice through the coloration layer 16 as an orange filter in the non-voltage applied area (OFF area) and looks orange from the outside. In the voltage-applied area (ON area), the light ray of the external light Q reflected from the polarising splitter film 12 is diffused through the diffusion layer 17, and looks white from the outside.

When the emission of the light emitting means 18 is used, the emission of the EL device is coloured through the coloration layer in the non-voltage applied area (OFF area) and looks orange slightly tinted with the emission colour (light green). In the voltage-applied area (ON area), the emission of the EL device is not transmitted through the polariser 11, and looks black.

Since the EL device has mild wavelength characteristics, the emission colour of the EL device is light. When the emission colour passes through the coloration layer, the colour of the light ray transmitted through the coloration layer is tinted with the coloration layer.

### (Alternate embodiment 4)

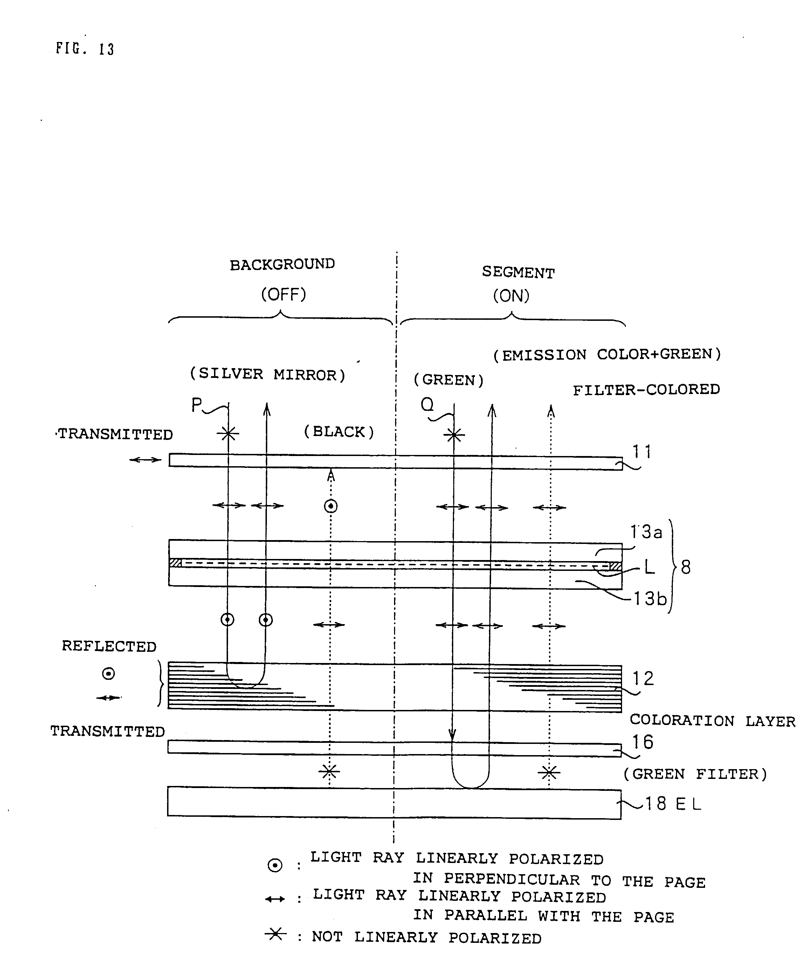

Referring to FIG. 13, the coloration layer 16 as a green filter is substituted for the light absorbing layer 16 as the first optical element shown in FIG. 11, and a surface-emitting, light green emission coloured EL device is used as the light emitting means 18.

When the external light rather than the emission of the light emitting means 18 is used, the specular reflection light ray of the external light P from the polarising splitter film 12 exits outward in a silver mirror tone in the non-voltage applied area (OFF area) because there is no diffusion layer 17. In the voltage applied area (ON area), the light ray of the external light Q transmitted through the polarising splitter film 12 passes through the coloration layer 16 twice to be coloured green and then exits outward.

When the emission of the light emitting means 18 is used, no light ray exits outwardly and a black display is presented because the polarisation axis of the polarising splitter means 12 is parallel to the polarisation axis of the polariser 11 in the non-voltage applied area (OFF area) and because the light ray is rotated by 90 degrees through the TN liquid crystal 8 interposed therebetween. In the voltage-applied area (ON area), because of its high energy level, the emission is transmitted through the coloration layer 16, and looks green from the outside as a result of coloration.

### (Alternate embodiment 5)

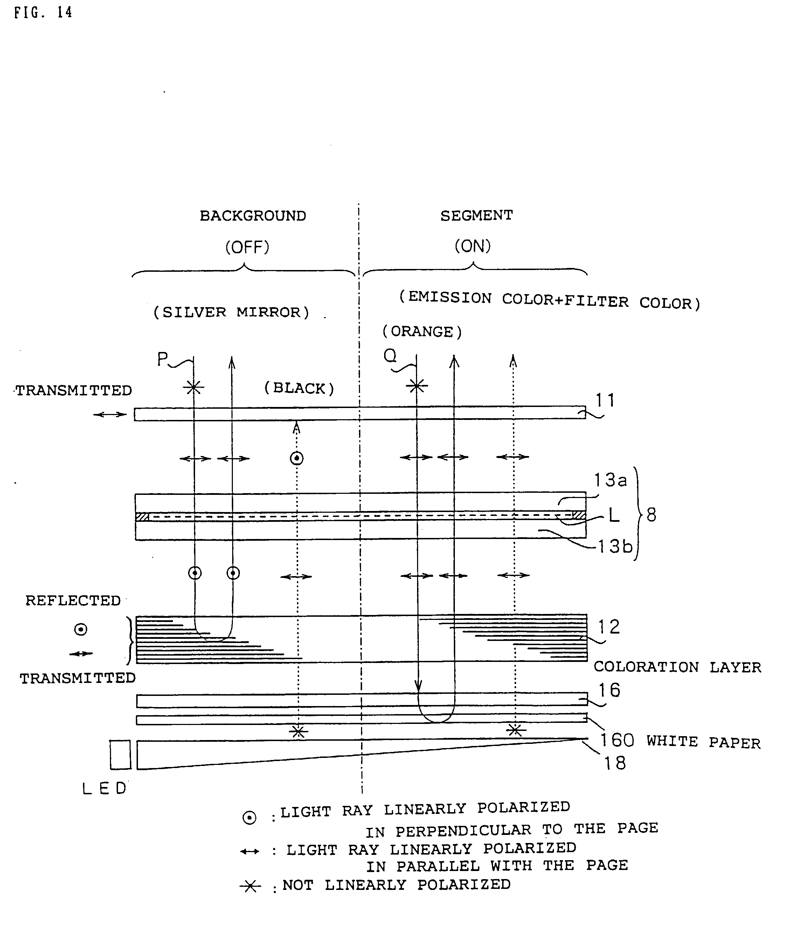

Referring to FIG. 14, a green LED device and a light guide plate as a side light type are substituted for the EL device as the light emitting means 18 shown in FIG. 13, and an orange filter as the coloration layer 16 and a semi-transmissive irregularly reflective means 160 beneath it are arranged. As the semi-transmissive irregularly reflective means 160, a typical copy sheet may be used.

When the external light rather the emission of the light emitting means 18 is used, the specular reflection light ray of the external light P from the polarising splitter film 12 exits outward in a silver mirror tone in the non-voltage applied area (OFF area) because there is no diffusion layer 17. In the voltage applied area (ON area), the light ray of the external light Q transmitted through the polarising splitter film 12 passes through the coloration layer 16 twice to be coloured orange and irregularly reflected by the copy sheet 160, and then exits outward.

When the emission of the light emitting means 18 is used, no light ray exits outwardly and a black display is presented because the polarisation axis of the polarising splitter means 12 is parallel to the polarisation axis of the polariser 11 in the non-voltage applied area (OFF area) and because the light ray is rotated by 90 degrees through the TN liquid crystal 8 interposed therebetween. In the voltage-applied area (ON area), because of its high energy level, the emission is transmitted through the copy sheet 160 and the orange filter as the coloration layer 16, and looks light orange.

The wavelength characteristics of the LED are sharp, and the emission of the LED is not efficiently transmitted through the coloration layer if it fails to match the coloration layer. The coloration layer for the LED is preferably a band pass filter (BPF) having wavelength characteristics.

The emission of the side light is not uniform in a range from a position farther from the LED and a position nearer to the LED, but with the copy sheet 160 arranged on the light emitting means 18, the emission is made uniform.

The relationship of the polarisation axis of the polariser, the polarisation axis of the polarising splitter film and the colour seen from outside the polariser is summarised in the following table.

| | Direction of polarisation axis | Colour with segment off (back-ground) | Colour with segment on |
|---|---|---|---|
| External light | Polarisation axis of wavelength specific to colour polariser is parallel to polarisation axis of polarising splitter film | Surface of pol. splitter film (silver mirror or white via diffusion layer) | Beneath pol. splitter film (black or colour of coloration layer) |
| | Polarisation axis of wavelength specific to colour polariser is perpendicular to polarisation axis of polarising splitter film | Beneath pol. splitter film (black or colour of coloration layer) | Surface of pol. splitter film (silver mirror or white via diffusion layer) |
| Back light | Polarisation axis of wavelength specific to colour polariser is parallel to polarisation axis of polarising splitter film | Black | Emission colour of back light, or back light colour + coloration layer |
| | Polarisation axis of wavelength specific to colour polariser is perpendicular to polarisation axis of polarising splitter film | Emission colour of back light, or back light colour + coloration layer | Black |

According to the display device of Claim 1 and the electronic timepiece of Claim 2, a second polarised light separating means capable of reflecting linearly polarised light components other than that having a predetermined polarisation axis is used, so that light, which is in conventional devices is either absorbed or scattered, is reflected, and the reflected light is used for the display. As a result, the background colour and such information as numerical information appear considerably brighter.

In addition, a surface of the second polarised light separating means may be formed into a smooth surface which specularly reflects light, so that a background and information (such as numerical information) display with a silver metallic tone can be produced, giving the display quality appearance. When the intensity of the light reflected by the second polarised light separating means is low, the desired glossy colour cannot be obtained, but using the second polarised light separating means capable of reflecting linearly polarised light components other than that having a predetermined polarisation axis allows a highly intense light to be reflected, thereby providing the desired glossy colour.

According to the electronic timepiece, providing a transmissive colour layer allows various colours, other than silver, with a glossy metallic tone to be produced. In particular, using a gold colour layer allows a glossy gold metallic tone to be realised, which gives the display quality appearance.

According to the electronic timepiece, providing a light-scattering layer at the back side of the second polarised light separating means with respect to the viewer allows the area other than the display area with a glossy metallic colour to have a non-glossy colour, so that the background colour area and the information display area can be definitely distinguished from each other.

According to the electronic timepiece, using a light emitting means as an additional structural element allows the viewer to freely select the method of display, that is either the display method using external light or that using light emitting means. In addition, compared to conventional electronic timepieces which utilises two polarisers for displaying information, electronic timepieces using the second polarised light separating means which can transmit a linearly polarised light component oriented in a certain direction and reflecting all other linearly polarised light components allow the background colour and the form of display of such information as numerical information to be considerably different, when the display methods are switched between that using external natural light and that using the light emitting means. Such a change may surprise the viewer.

According to another embodiment of the electronic timepiece, orange or other such colours stand out against black, so that numerical information or the like displayed in such colours is bright and thus easy to read, easily attracting the human eye.

According to another embodiment of the electronic timepiece, in the display of one electronic timepiece, numerical information or the like can be displayed in several colours and several background colours can be produced, so that various types of displays can be realised.

According to another embodiment of the electronic timepiece , even when a common light source that generates white light is used, various colours can be produced by the use of a light emitting means.

According to another embodiment of the electronic timepiece , a polarised light separating film having a laminated structure of a plurality of thin films is used as the second polarised light separating means. The polarised light separating film having this structure is extremely thin and flexible, so that the electronic timepiece as a whole can be made thin, and the manufacturing process can be simplified.

## Claims

1. A display device comprising:
first polarising splitter means which transmits therethrough a light ray component linearly polarised in one direction while not transmitting therethrough a light ray component linearly polarised in a direction perpendicular to said one direction;
polarisation axis varying means, disposed at a position for receiving the linearly polarised light ray transmitted from said first polarising splitter means, for selecting between a state in which a polarisation axis is varied and a state in which the polarisation axis is not varied; and
second polarising splitter means, diametrically opposed to said first polarising splitter means with said polarisation axis varying means interposed therebetween, for transmitting a light ray component linearly polarised in one direction and reflecting a light ray component linearly polarised in a direction perpendicular to said one direction, wherein the surface of said second polarising splitter means facing said polarisation axis varying means is a smooth surface that reflects a light ray in specular reflection.

2. An electronic watch comprising:
first polarising splitter means which transmits therethrough a light ray component linearly polarised in one direction while not transmitting therethrough a light ray component linearly polarised in a direction perpendicular to said one direction;
polarisation axis varying means, disposed at a position for receiving the linearly polarised light ray transmitted from said first polarising splitter means, for selecting between a state in which a polarisation axis is varied and a state in which the polarisation axis is not varied;
second polarising splitter means, diametrically opposed to said first polarising splitter means with said polarisation axis varying means interposed therebetween, for transmitting a light ray component linearly polarised in one direction, and reflecting in specular reflection a light ray component linearly polarised in a direction perpendicular to said one direction; and
light emitting means arranged on the side of said second polarising splitter means opposite to said polarisation axis varying means.

3. An electronic watch comprising a lamination of
a first polariser which transmits a light ray component linearly polarised in a first direction while not transmitting a light ray component linearly polarised in a second direction perpendicular to said first direction,
a twisted nematic liquid crystal layer which rotates a polarisation axis in an off state while not rotating the polarisation axis in an on state,
a second polariser which transmits a light ray component linearly polarised in a third direction while reflecting, in specular reflection, a light ray component linearly polarised in a fourth direction perpendicular to said third direction,
a first optical element,
a reflective layer, and
light emitting means laminated in the above order.

4. An electronic watch according to Claim 3, wherein said reflective layer irregularly reflects a light ray travelling from said second polariser to said light emitting means.

5. An electronic watch according to Claim 4, wherein said first optical element is a light absorbing layer.

6. An electronic watch according to Claim 4, wherein said first optical element is a coloration layer.

7. An electronic watch according to Claim 5 comprising a second optical element between said twisted nematic liquid crystal layer and said second polariser.

8. An electronic watch according to Claim 7, wherein said second optical element is either a light diffusion layer or a light scattering layer.

9. An electronic watch according to Claim 6 comprising a second optical element between said twisted nematic liquid crystal layer and said second polariser.

10. An electronic watch according to Claim 9, wherein said second optical element is either a light diffusion layer or a light scattering layer.

11. An electronic watch according to Claim 8, wherein said light absorbing layer is a tracing paper.

12. An electronic watch according to Claim 5, wherein said light absorbing layer has a visible light transmittance within a range from 40% to 80%.

13. An electronic watch according to Claim 12, wherein said light absorbing layer has a visible light transmittance within a range from 55% to 65 %.

14. An electronic watch according Claim 6 comprising means which is arranged between said coloration layer and said reflective layer, and which transmits a light ray from said light emitting means while irregularly reflecting a light ray from said coloration layer.

15. An electronic watch according to Claim 11, wherein said light emitting means comprises an electroluminescence device.

16. An electronic watch according to Claim 13, wherein said light emitting means comprises a light emitting diode.

17. An electronic watch according to Claim 10, wherein said light emitting means comprises an electroluminescence device.

18. An electronic watch according to Claim 6, wherein said light emitting means comprises an electroluminescence device.

19. An electronic watch according to Claim 14, wherein said light emitting means comprises a light emitting diode.

20. An electronic watch according to Claim 2 comprising a light-transmissive colour layer between said polarisation axis varying means and said light emitting means.

21. An electronic watch according to Claim 3, wherein said light emitting means comprises an electroluminescence device or a light emitting diode, and emits a light ray of at least one of orange, red, light green, and green to said twisted nematic liquid crystal layer via said second polariser.

22. An electronic watch comprising a lamination of
a first polariser which transmits a light ray component polarised in a direction parallel to a first polarisation direction while absorbing a light ray component polarised in perpendicular to said first polarisation direction,
a liquid crystal layer which rotates the polarisation direction of an incident light ray by 90 degrees in a non-voltage applied state while not rotating the polarisation direction of the incident light ray in a voltage-applied state,
polarising splitter means which transmits a light ray component polarised in a second polarisation direction while reflecting a light ray component polarised in perpendicular to said second polarisation direction,
a first optical element,
reflective means for irregularly reflecting a light ray, and
light emitting means for emitting an emission colour light laminated in the above order, wherein
when said first polarisation direction is parallel to said second polarisation direction, a first colour light ray from the external light in the non-voltage applied state has the colour of the light ray reflected from said polarising splitter means while a second colour light ray from the external light in the voltage-applied state has the colour of the light ray transmitted through said first optical element;
when said first polarisation direction is parallel to said second polarisation direction, a third colour light ray from the emission of said light emitting means in the non-voltage applied state is black while a fourth colour light ray from the emission of said light emitting means in the voltage-applied state has the colour of the light ray transmitted through said first optical element;
when said first polarisation direction is perpendicular to said second polarisation direction, a fifth colour light from the external light in the non-voltage applied state has the colour of the light ray transmitted through said first optical element while a sixth colour light ray from the external light in the voltage-applied state has the colour of the light ray reflected from said polarising splitter means; and
when said first polarisation direction is perpendicular to said second polarisation direction, a seventh colour light from the emission of said light emitting means in the non-voltage applied state has the colour of the light ray transmitted through said first optical element while an eighth colour light from the emission of said light emitting means in the voltage applied state is black.

23. An electronic watch according to Claim 22 comprising a light scattering layer or a light diffusion layer between said liquid crystal layer and said polarising splitter means and wherein both said first colour light ray and said sixth colour light ray are white.

24. An electronic watch according to Claim 22, wherein
said first optical element is a light absorbing layer;
both said second colour light ray and said fifth colour light ray are black; and
both said fourth colour light ray and said seventh colour light ray have the emission colour.

25. An electronic watch according to Claim 22, wherein
said first optical element is a coloration layer;
both said second colour light ray and said fifth colour light ray are the colour attributed to said coloration layer; and
both said fourth colour light ray and said seventh colour light ray have the emission colour that is coloured through the transmission through said coloration layer.
